# EUROPEAN PATENT SPECIFICATION

(11) **EP 3 293 990 B1**
(45) Date of publication and mention of the grant of the patent: **05.02.2020**
(21) Application number: 17190449.3
(22) Date of filing: 11.09.2017
(51) Int. Cl.: H04W 4/50, G07G 5/00, G06Q 20/20

(54) **WIRELESS COMMUNICATION SYSTEM, INFORMATION OUTPUT DEVICE, AND MERCHANDISE SALES INFORMATION PROCESSING DEVICE**
DRAHTLOSKOMMUNIKATIONSSYSTEM, INFORMATIONSAUSGABEVORRICHTUNG UND WARENVERKAUFSINFORMATIONSVERARBEITUNGSVORRICHTUNG
SYSTÈME DE COMMUNICATION SANS FIL, DISPOSITIF DE SORTIE D'INFORMATIONS ET DISPOSITIF DE TRAITEMENT D'INFORMATIONS DE VENTES DE MARCHANDISES

(30) Priority: 12.09.2016 JP 2016177933
(43) Date of publication of application: 14.03.2018
(73) Proprietor: Toshiba Tec Kabushiki Kaisha, Shinagawa-ku Tokyo 141-8562 (JP)
(72) Inventor: TSUCHIDA, Sunao, Shinagawa-ku, Tokyo 141-8562 (JP); OHISHI, Sadatoshi, Shinagawa-ku, Tokyo 141-8562 (JP)
(74) Representative: Bandpay & Greuter

(56) References cited:
- EP-A1- 3 051 509
- US-A1- 2013 032 634
- US-A1- 2016 042 574
- US-A1- 2016 127 600

## Description

### FIELD

The present invention relates to a communication setting technology between diverse units in general, and embodiments described herein relate more particularly to a wireless communication system, an information output device, and a merchandise sales information processing device.

### BACKGROUND

Various peripheral devices connected to a POS terminal are in practical use. The peripheral devices are, for example, a touch scanner, a stationary bar code scanner, a receipt printer, a drawer, an automatic change machine, a credit card terminal, a personal identification number input device, a point card terminal, a keyboard, a customer display device, and the like. In addition, a technique of wirelessly connecting the peripheral devices to the POS terminal is in practical use.

In order to wirelessly connect the peripheral devices to the POS terminal, it is necessary to make communication setting between the peripheral devices and the POS terminal. For example, there is a technique of specifying a communication partner by reading a communication address thereof using a scanner and performing communication setting based on the communication address. However, since the peripheral device which does not have an input interface that receives inputs, such as a receipt printer or a display device, cannot read the communication address, there is a problem that the communication setting is complicated.

US 2016/0127600 discloses the method for establishing a connection between the printing device and the client device.

US 2016/00427574 discloses a system comprising a receipt printer and a POS terminal.

EP 3051509 discloses a POS system establishing a communication between the POS terminal and the barcode scanner.

US 2013/0032634 discloses a system comprising a barcode generation device and a mobile device.

To solve such problems, there is provided a wireless communication system comprising:
a point-of-sale (POS) device; and
a printer,
wherein the printer includes
   a first wireless communication unit configured to perform wireless communication at a predetermined communication frequency,
   a memory that stores a communication address by which the POS device can wirelessly communicate with the printer, and
   a processor configured to generate a communication setting pattern by encoding the communication address and the predetermined communication frequency, and
wherein the POS device includes
   a reader;
   a second wireless communication unit; and
   a processor configured to decode the communication address and the communication frequency from the communication setting pattern after the reader acquires the communication setting pattern, and control the second wireless communication unit to transmit a confirmation response to the communication address at the communication frequency, and
wherein:the processor of the printer is configured to
   - receive the confirmation response transmitted by the first wireless communication unit from the POS device through the wireless communication,
   - determine whether or not the received confirmation response contains the communication address that coincides with the communication address stored in the memory, and
   - in a case where the received confirmation response contains the communication address that coincides with the communication address stored in the memory, transmit the confirmation response to the POS device by using the first wireless communication unit,
wherein the processor of the POS device is configured to
   - receive the confirmation response transmitted from the printer through the wireless communication by using the second wireless communication unit,
   - determine whether or not the confirmation response is transmitted to itself as a target and whether or not a processing according to the confirmation response is normally performed, and
   - in a case where the confirmation response is transmitted to itself as a target and the processing according to the confirmation response is normally performed, to determine that a communication path is established between the printer and the POS device,
characterized in that: in a case where the communication path is established between the printer and the POS device,
   the POS device is configured to transmit a change request of a communication channel including information indicating a communication channel which is newly used for the wireless communication with the printer to the printer,
   in a case where the printer receives the change request of the communication channel, the printer is configured to:
      - recognize the communication channel which is newly used for the wireless communication with the POS device from the change request of the communication channel,
      - transmit a response to the change request of the communication channel to the POS device, and
      - rewrite the communication channel stored in the memory of the printer to the communication channel which is newly used, and
   in a case where the POS device receives the response to the change request of the communication channel, the POS device is configured to rewrite the communication channel of the communication setting of a nonvolatile memory thereof to the newly used communication channel.

Preferably, the processor of the printer generates the communication setting pattern upon power-on of the printer.

Preferably still, the printer further includes a power receiving unit is configured to detect the power-on of the printer when power is received thereby from an external source.

Preferably yet, the external source is an AC adapter and the power is received through a power line.

Suitably, the external source is a wireless power transmission base and the power is received wirelessly.

Suitably yet, the confirmation response incudes a communication address of the POS device.

The invention also relates to a printer that communicates with a point-of-sale (POS) device, the printer comprising:
a wireless communication unit configured to perform wireless communication at a predetermined communication frequency;
a memory that stores a communication address by which the POS device can wirelessly communicate with the printer; and
a processor configured to generate a communication setting pattern by encoding the communication address and the predetermined communication frequency, and
wherein:the processor is configured to
   - receive the confirmation response transmitted by the wireless communication unit from the POS device through the wireless communication,
   - determine whether or not the received confirmation response contains the communication address that coincides with the communication address stored in the memory, and
   - in a case where the received confirmation response contains the communication address that coincides with the communication address stored in the memory , transmit the confirmation response to the POS device by using the wireless communication unit,
   - characterized in that: in a case where a communication path is established between the printer and the POS device,
   in a case where the printer receives a change request of a communication channel including information indicating a communication channel which is newly used for the wireless communication with the printer to the printer, the printer is configured to:
   - recognize the communication channel which is newly used for the wireless communication with the POS device from the change request of the communication channel,
   - transmit a response to the change request of the communication channel to the POS device, and
   rewrite the communication channel stored in the memory of the printer to the communication channel which is newly used.

Suitably, the processor generates the communication setting pattern upon power-on of the printer.

Suitably still, the printer further comprises:
a power receiving unit is configured to detect the power-on of the printer when power is received thereby from an external source.

Suitably yet, the external source is an AC adapter and the power is received through a power line.

Suitably further, the external source is a wireless power transmission base and the power is received wirelessly.

The invention further concerns a point-of-sale (POS) device that communicates with a printer which encodes a communication frequency and a communication address by which the POS device can wirelessly communicate with the printer and outputs the encoded information as a communication setting pattern, the POS device comprising:
a reader;
a wireless communication unit; and
a processor configured to decode the communication address and the communication frequency from the communication setting pattern after the reader acquires the communication setting pattern, and control the wireless communication unit to transmit a confirmation response to the communication address at the communication frequency, and
wherein the processor is configured to
   - receive the confirmation response transmitted from the printer through the wireless communication by using the wireless communication unit,
   - determine whether or not the confirmation response is transmitted to itself as a target and whether or not a processing according to the confirmation response is normally performed, and
   - in a case where the confirmation response is transmitted to itself as a target and the processing according to the confirmation response is normally performed, to determine that a communication path is established between the printer and the POS device,
characterized in that: in a case where the communication path is established between the printer and the POS device,
   the POS device is configured to transmit a change request of a communication channel including information indicating a communication channel which is newly used for the wireless communication with the printer to the printer,
in a case where the POS device receives a response to the change request of the communication channel from the printer, the POS device is configured to rewrite the communication channel of the communication setting of a nonvolatile memory thereof to the newly used communication channel.

Preferably, the confirmation response incudes a communication address of the POS device.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a view illustrating a configuration example of a wireless communication system according to a first embodiment.
FIG. 2 is a diagram illustrating a configuration example of a POS terminal, a scanner, a receipt printer, and an AC adapter of the wireless communication system according to the first embodiment.
FIG. 3 is a flow diagram depicting an example of communication setting processing which is performed by the POS terminal and the receipt printer.
FIG. 4 is a view illustrating a configuration example of a wireless communication system according to a second embodiment.
FIG. 5 is a diagram illustrating a configuration example of a POS terminal, a scanner, a receipt printer, and a power transmission base of the wireless communication system according to the second embodiment.
FIG. 6 is a diagram illustrating an operation of the receipt printer according to the second embodiment.

### DETAILED DESCRIPTION

Embodiments provide a wireless communication system, an information output device, and a merchandise sales information processing device which can easily perform wireless communication setting.

In general, according to one embodiment, a wireless communication system includes a point-of-sale (POS) device, and a printer. The printer includes a first wireless communication unit configured to perform wireless communication at a predetermined communication frequency, a memory that stores a communication address by which the POS device can wirelessly communicate with the printer, and a processor configured to generate a communication setting pattern by encoding the communication address and the predetermined communication frequency. The POS device includes a reader, a second wireless communication unit, and a processor configured to decode the communication address and the communication frequency from the communication setting pattern after the reader acquires the communication setting pattern, and control the second wireless communication unit to transmit a confirmation response to the communication address at the communication frequency.

Hereinafter, a wireless communication system according to an embodiment, a printer, and a POS terminal will be described with reference to the drawings.

### First Embodiment

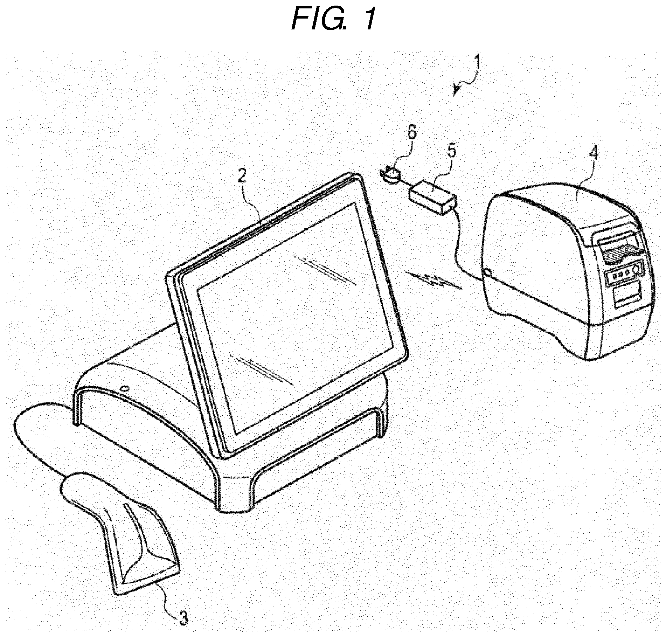

First, a wireless communication system 1 according to a first embodiment will be described. FIG. 1 is a view illustrating a configuration example of the wireless communication system 1 according to the first embodiment. The wireless communication system 1 is used for an accounting system or the like. The wireless communication system 1 is, for example, installed in a store such as a retail store. The wireless communication system 1 includes, for example, a POS terminal 2, a scanner 3, a receipt printer 4, an AC adapter 5, and a plug 6.

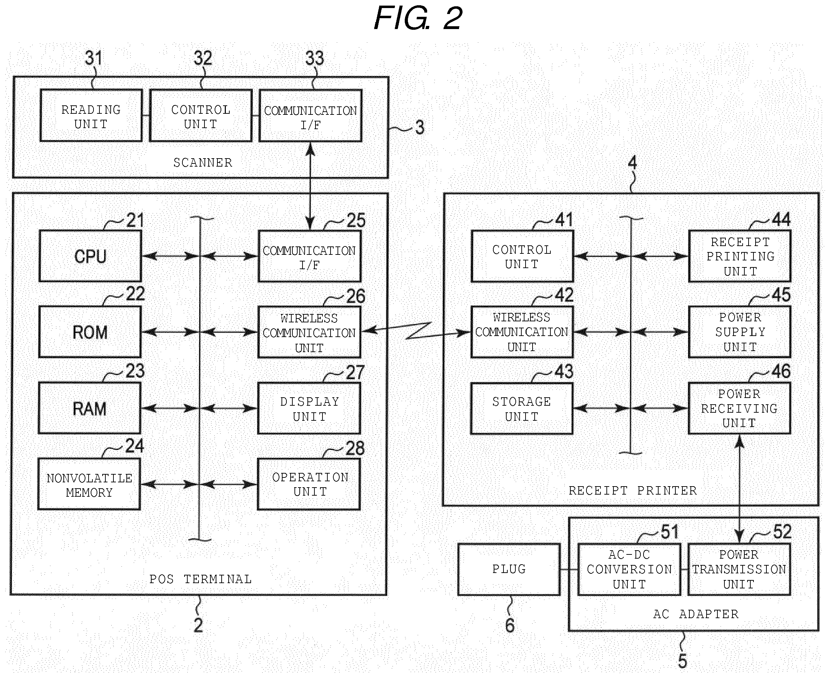

FIG. 2 is a diagram illustrating a configuration example of the POS terminal 2, the scanner 3, the receipt printer 4, and the AC adapter 5 of the wireless communication system 1.

The POS terminal 2 is a an information processing device (e.g., computing device) that recognizes merchandise, calculates the total amount of payment, and performs settlement. The POS terminal 2 recognizes merchandise in accordance with a code, such as a bar code, of the merchandise which is read by the scanner 3. The POS terminal 2 recognizes the amount of money of the recognized merchandise with reference to a table in which the identification information and the amount of money for each item of merchandise are associated with each other in advance, and calculates the total amount of payment. Furthermore, the POS terminal 2 performs the settlement in accordance with the amount of money received from a customer. The POS terminal 2 includes a CPU 21, a ROM 22, a RAM 23, a nonvolatile memory 24, a communication I/F 25, a wireless communication unit 26, a display unit 27, and an operation unit 28. The POS terminal 2 may further include a drawer for containing cash.

The CPU 21 is a processor which performs arithmetic processing. The CPU 21 performs various types of processing on the basis of data such as a program stored in the ROM 22 or the nonvolatile memory 24. The CPU 21 is programmed to function as a control unit which can perform various operations by executing the program stored in the ROM 22 or the nonvolatile memory 24.

The ROM 22 is a nonvolatile memory for read only. The ROM 22 stores a program and data or the like which is used for the program.

The RAM 23 is a volatile memory which functions as a working memory. The RAM 23 temporarily stores data or the like which is processed by the CPU 21. In addition, the RAM 23 temporarily stores a program which is executed by the CPU 21.

The nonvolatile memory 24 is a storage medium which can store various types of information. The nonvolatile memory 24 stores a program and data or the like which is used for the program. The nonvolatile memory 24 is, for example, a solid state drive (SSD), a hard disk drive (HDD), or other storage devices. Instead of the nonvolatile memory 24, a memory I/F such as a card slot into which a storage medium such as a memory card can be inserted may be provided. For example, the nonvolatile memory 24 stores a merchandise table in which identification information and the amount of money for each item of merchandise are correlated. In addition, for example, the nonvolatile memory 24 stores communication addresses that are identification information for allowing other apparatus to identify the POS terminal 2. The communication address is identification information such as MAC. In addition, for example, the nonvolatile memory 24 stores communication setting which is set by the CPU 21. The communication setting includes a communication channel (which corresponds to a certain frequency) which is used for wireless communication and communication address which is identification information for identifying an apparatus of a communication partner. The communication setting is generated by communication setting processing which will be described below. The communication setting may be stored in the RAM 23.

The communication I/F 25 is an interface for communicating with other apparatuses. The communication I/F 25 is a connection terminal having a configuration conforming to a certain communication standard such as USB. The communication I/F 25 may be a cable which can be connected to the scanner 3. The communication I/F 25 may perform wireless communication with the scanner 3 in accordance with a standard such as Bluetooth®.

The wireless communication unit 26 is a circuit for performing wireless communication with other electronic apparatuses. The wireless communication unit 26 has a configuration in which wireless communication conforming to a communication standard for wireless communication, such as Wi-Fi® or Bluetooth is performed. For example, the wireless communication unit 26 includes an antenna and a circuit which transmits and receives a radio wave by using the antenna. The wireless communication unit 26 determines a communication channel, based on the communication setting stored in the nonvolatile memory 24. The wireless communication unit 26 changes a transmission/reception frequency that is a frequency which is used for communication, depending on the determined communication channel.

The display unit 27 includes a display device which displays a screen in response to a video signal which is input from the CPU 21 or a display control unit such as a graphic controller which is not illustrated.

The operation unit 28 generates an operation signal, based on an operation of an operation member. The operation member is, for example, a touch sensor, a numeric keypad, a keyboard, or the like. The touch sensor is, for example, a resistive touch sensor, a capacitive touch sensor, or the like. That is, the touch sensor acquires information indicating a position designated within a certain region. The touch sensor and the display device of the display unit 27 are integrally configured as a touch panel display. The touch sensor senses a position touched on the screen displayed on the display device and supplies a signal indicating the position to the CPU 21.

The scanner 3 is a device that reads identification information for identifying merchandise. For example, the scanner 3 acquires the identification information by reading a code (for example, a bar code, a two-dimensional code, other codes, or the like) printed on or attached to the merchandise, and transmits the acquired identification information to the POS terminal 2. The scanner 3 includes a reading unit 31, a control unit 32, and a communication I/F 33.

The reading unit 31 reads codes of the merchandise. For example, the reading unit 31 reads the code of the merchandise by irradiating the merchandise with light to receive reflected light.

The control unit 32 analyzes the code read by the reading unit 31 to acquire identification information of the merchandise. The control unit 32 transmits the acquired identification information to the POS terminal 2 through the communication I/F 33.

The communication I/F 33 is an interface for communicating with other devices. The communication I/F 33 is a connection terminal having a configuration conforming to a certain communication standard such as USB. The communication I/F 33 may be a cable which can be connected to the POS terminal 2. The communication I/F 33 may perform wireless communication conforming to a standard such as Bluetooth with the POS terminal 2. That is, the scanner 3 may be wirelessly connected to the POS terminal 2.

The CPU 21 of the POS terminal 2 recognizes the amount of money of the merchandise scanned by the scanner 3 by extracting the identification information which is acquired by the scanner 3 based on the aforementioned merchandise table. In addition, the CPU 21 recognizes a deposit amount which is the amount of money that an operator of the POS terminal 2 receives from a customer, in response to an operation signal which is supplied from the operation unit 28. The CPU 21 performs settlement based on the deposit amount and the amount of money of the merchandise. Furthermore, the CPU 21 generates print data to be printed on a sheet (information output instruction), based on the settlement result. For example, the print data is configured by arranging a plurality of lines, each being configured with a plurality of pixels. Print items of the print data include a default print item such as a store name, date and time, merchandise name, the amount of money of the merchandise, a deposit amount, a change amount, and the like.

The CPU 21 of the POS terminal 2 transmits the print data to the receipt printer 4 through the wireless communication unit 26. For example, the CPU 21 changes the transmission/reception frequency of the wireless communication unit 26, based on the communication channel of the communication setting stored in the nonvolatile memory 24. Furthermore, the CPU 21 transmits the print data to the transmission destination by using the wireless communication unit 26. The transmission destination is set by the communication address of the communication setting stored in the nonvolatile memory 24.

The receipt printer 4 is an output device that prints information of settlement results acquired from the POS terminal 2 on a medium. The receipt printer 4 receives the print data indicating the settlement results from the POS terminal 2 and prints the settlement results on the medium such as a paper sheet according to the received print data. The receipt printer 4 includes a control unit 41, a wireless communication unit 42, a storage unit 43, a receipt printing unit 44, a power supply unit 45, and a power receiving unit 46.

The control unit 41 controls an operation of the receipt printer 4. The control unit 41 includes a processor such as a CPU, a program memory, a working memory, various interfaces, and the like. The processor of the control unit 41 executes a program stored in the program memory to realize the functions of the control unit 41. For example, the control unit 41 controls wireless communication which is performed by the wireless communication unit 42. In addition, for example, the control unit 41 controls the receipt printing unit 44 such that print of a receipt is performed by the receipt printing unit 44, based on the print data received from the POS terminal 2 through the wireless communication unit 42.

The wireless communication unit 42 is a circuit for performing wireless communication with other electronic apparatuses. The wireless communication unit 42 has a configuration in which wireless communication conforming to a communication standard for wireless communication, such as Wi-Fi® or Bluetooth is performed. For example, the wireless communication unit 42 includes an antenna and a circuit which transmits and receives a radio wave by using the antenna. The wireless communication unit 42 determines a communication channel, based on the communication setting set by the control unit 41. That is, the wireless communication unit 42 performs wireless communication at a predetermined frequency. The wireless communication unit 42 changes a transmission/reception frequency that is a frequency which is used for wireless communication, depending on the determined communication channel.

The storage unit 43 is a storage medium which can store various types of information. The storage unit 43 stores a program and data or the like which is used for the program. The storage unit 43 is, for example, a semiconductor memory. Instead of the storage unit 43, a memory I/F such as a card slot into which a storage medium such as a memory card can be inserted may be provided. For example, the storage unit 43 stores the communication channel that the wireless communication unit 42 uses for wireless communication, and a communication address that is the identification information for allowing other apparatuses to identify the receipt printer 4.

The receipt printing unit 44 prints a design on a printing medium such as a sheet drawn from a roll paper contained in a containment unit (not illustrated) of the receipt printing unit 44, based on the control of the control unit 41. The receipt printing unit 44 outputs a receipt by printing the design according to the print data.

The power supply unit 45 converts a voltage of power which is supplied from the power receiving unit 46, and supplies the power to each unit of the receipt printer 4.

The power receiving unit 46 receives the power which is supplied from the AC adapter 5 and supplies the power to the power supply unit 45.

The AC adapter 5 supplies power to the receipt printer 4. The AC adapter 5 includes an AC-DC conversion unit 51 and a power transmission unit 52. The AC-DC conversion unit 51 converts AC power supplied from a commercial power supply (not illustrated) through a plug 6 into DC power. The power transmission unit 52 supplies the DC power converted by the AC-DC conversion unit 51 to the receipt printer 4 through a cable.

The control unit 41 of the receipt printer 4 outputs the receipt by printing the design according to the print data supplied from the POS terminal 2 through the wireless communication unit 42 on a medium by using the receipt printing unit 44.

Next, the communication setting processing which is performed between the receipt printer 4 and the POS terminal 2 will be described.

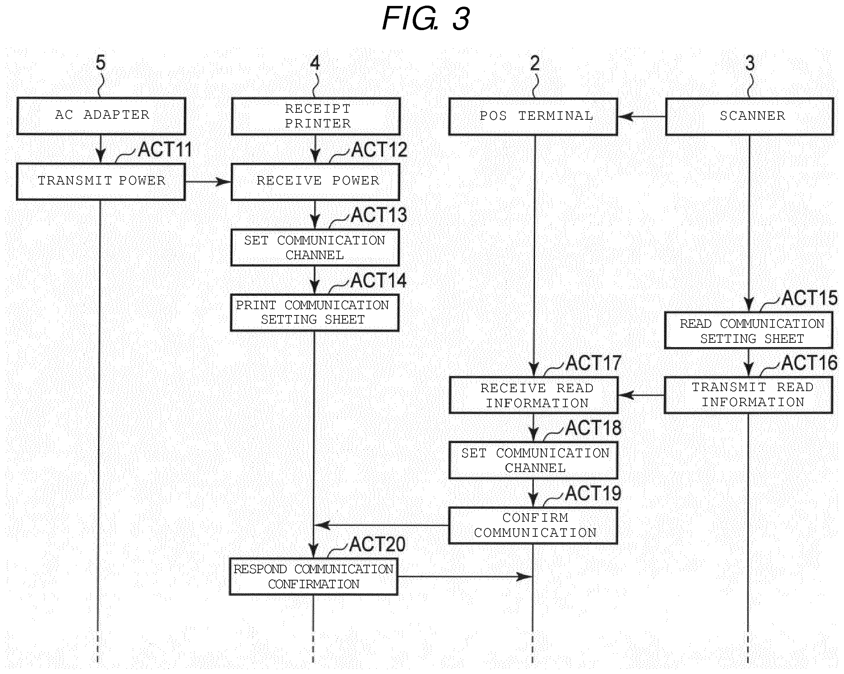

FIG. 3 is a flow diagram depicting an operation of each configuration of the wireless communication system 1, when the communication setting processing is performed between the POS terminal 2 and the receipt printer 4. A communication address for allowing other devices to identify the POS terminal 2, which is stored in the nonvolatile memory 24 of the POS terminal 2, is referred to as a POS terminal communication address, a communication address for allowing other devices to identify the receipt printer 4 stored in the storage unit 43 of the receipt printer 4 to other devices is referred to as a receipt printer communication address, and description thereof will be made hereinafter.

First, if the AC adapter 5 is connected to the commercial power supply through the plug 6, the AC adapter 5 transmits DC power to the power receiving unit 46 of the receipt printer 4 (ACT 11).

The power receiving unit 46 receives the DC power supplied from the AC adapter 5 (ACT 12). In a case where power is supplied from the AC adapter 5, the control unit 41 of the receipt printer 4 executes a program.

In a case where the DC power supplied from the AC adapter 5 is received, that is, in a case where it is recognized that the power of the receipt printer 4 is on, the control unit 41 of the receipt printer 4 sets a communication channel stored in the storage unit 43 to the wireless communication unit 42 (ACT 13). Thereby, the control unit 41 sets the transmission/reception frequency of the wireless communication unit 42 to a frequency corresponding to the communication channel stored in the storage unit 43. Thereby, the control unit 41 of the receipt printer 4 enters a state in which wireless communication is performed. The communication channel which is used for setting the transmission/reception frequency of the wireless communication unit 42 may be preset (for example, default setting), or may be determined from a plurality of options based on, for example, a random number or the like.

In addition, in a case where it is recognized that the power of the receipt printer 4 is on, the control unit 41 of the receipt printer 4 outputs a sheet on which a communication setting pattern is printed by using the receipt printing unit 44 (ACT 14). The control unit 41 of the receipt printer 4 generates the communication setting pattern, based on the communication channel and the receipt printer communication address stored in the storage unit 43.

The communication setting pattern is read by the scanner 3 connected to the POS terminal 2. The communication setting pattern is, for example, a bar code, a two-dimensional code, other codes, or the like. The control unit 41 generates the communication setting pattern by encoding the communication channel and the receipt printer communication address stored in the storage unit 43. The communication channel which is encoded in the communication setting pattern is a communication channel which is used for setting the transmission/reception frequency of the wireless communication unit 42 in ACT 13. In addition, the receipt printer communication address which is used for the communication setting pattern may be preset (for example, default setting) or may be generated based on, for example, a random number or the like.

The control unit 41 of the receipt printer 4 outputs the communication setting sheet by printing the generated communication setting pattern on a medium by using the receipt printing unit 44. That is, the communication setting sheet is a medium on which the communication setting pattern that encodes the communication channel and the receipt printer communication address set in the receipt printer 4 is printed. The control unit 41 of the receipt printer 4 may further print a message which prompts a change of the communication setting on the communication setting sheet.

The POS terminal 2 performs communication setting processing to set the communication setting including the communication channel and the receipt printer communication address, based on the communication setting pattern printed on the communication setting sheet by the receipt printer 4. An operator of the POS terminal 2 makes the scanner 3 to read the communication setting pattern printed on the communication setting sheet output from the receipt printer 4 (ACT 15).

The control unit 32 of the scanner 3 transmits the information, which is read from the communication setting sheet, to the POS terminal 2 (ACT 16). That is, the control unit 32 of the scanner 3 analyzes the read communication setting pattern, acquires a communication channel and a receipt printer communication address which are original, and transmits the acquired communication channel and the acquired receipt printer communication address to the POS terminal 2.

The CPU 21 of the POS terminal 2 receives the information read by the scanner 3 from the scanner 3 (ACT 17). That is, the CPU 21 acquires the communication channel and the receipt printer communication address from the scanner 3.

The CPU 21 of the POS terminal 2 sets the communication channel of the wireless communication unit 26, based on the communication channel acquired from the scanner 3 (ACT 18). That is, the CPU 21 generates communication setting including the communication channel and the receipt printer communication address which are acquired, and stores the generated communication setting in the nonvolatile memory 24. Furthermore, the CPU 21 sets the transmission/reception frequency of the wireless communication unit 26 to a frequency corresponding to the communication channel of the communication setting of the nonvolatile memory 24. That is, the CPU 21 sets the transmission/reception frequency of the wireless communication unit 26 to a frequency corresponding to the communication channel acquired from the scanner 3. Thereby, the same communication channel is set in the receipt printer 4 and the POS terminal 2.

The CPU 21 of the POS terminal 2 designates the receipt printer communication address of the communication setting of the nonvolatile memory 24 and transmits a communication confirmation signal to the receipt printer 4 by using the wireless communication unit 26 (ACT 19). The communication confirmation signal includes the receipt printer communication address, a POS terminal communication address, and information requesting a response to the communication confirmation signal. The CPU 21 designates an apparatus of a target to which the communication confirmation signal is transmitted in accordance with the receipt printer communication address by storing the receipt printer communication address at a predetermined position of the communication confirmation signal.

The control unit 41 of the receipt printer 4 receives the communication confirmation signal transmitted by the wireless communication unit 42 from the POS terminal 2 through the wireless communication. In a case where the communication confirmation signal is received, the control unit 41 determines whether or not the communication confirmation signal contains an address at a predetermined position of the communication confirmation signal that coincides with the receipt printer communication address stored in the storage unit 43. If so, the control unit 41 determines that it is the target of the communication confirmation signal. In addition, the control unit 41 acquires the communication address of the apparatus that transmits the communication confirmation signal to the receipt printer 4. That is, the control unit 41 acquires the POS terminal communication address from the communication confirmation signal. For example, the control unit 41 stores the acquired POS terminal communication address in the storage unit 43.

In a case where the control unit 41 of the receipt printer 4 determines that it is the target of the communication confirmation signal, the control unit 41 transmits a communication confirmation response to the POS terminal 2 by using the wireless communication unit 42 (ACT 20). The communication confirmation response is a signal including the POS terminal communication address and information indicating results of processing according to the communication confirmation signal. The control unit 41 designates the POS terminal 2 as a target of the communication confirmation response by storing the POS terminal communication address at a predetermined position of the communication confirmation response.

The CPU 21 of the POS terminal 2 receives the communication confirmation response transmitted from the receipt printer 4 through wireless communication by using the wireless communication unit 26. In a case where the communication confirmation response is received, the CPU 21 determines whether or not the communication confirmation response is transmitted to itself as a target and whether or not the processing according to the communication confirmation signal is normally performed. In a case where it is determined that the communication confirmation response is transmitted to itself as a target and the processing according to the communication confirmation signal is normally performed, the CPU 21 determines that a communication path is established between the receipt printer 4 and the POS terminal 2.

As described above, the receipt printer 4 outputs the communication setting sheet on which the communication setting pattern including a communication address of the receipt printer 4 and communication channel are printed. The POS terminal 2 reads the communication setting pattern from the communication setting sheet by using the scanner 3, acquires the communication address of the receipt printer 4 and the communication channel, and performs initial setting for communication with the receipt printer 4 by using the communication address of the receipt printer 4 and communication channel which are acquired from the communication setting sheet. Accordingly, the same communication channel is set between the receipt printer 4 and the POS terminal 2, and the receipt printer 4 and the POS terminal 2 can acquire mutual communication addresses. Thereby, it is possible to easily make wireless communication setting between the receipt printer 4 and the POS terminal 2.

In addition, the receipt printer 4 outputs communication setting sheet in which a communication setting pattern including the communication address of the receipt printer 4 and the communication channel of the receipt printer 4 are printed at a predetermined timing such as turning on the power supply. For example, in a case where the power supply of the receipt printer 4 is changed from an off state to an on state, the receipt printer 4 print out the communication setting pattern. Thereby, the receipt printer 4 can print out the communication setting sheet for setting the wireless communication, even in a case where the receipt printer 4 does not include any operation member which can be operated by the operator.

In addition, in a case where the communication path is established between the receipt printer 4 and the POS terminal 2, the POS terminal 2 may have a configuration in which a command is transmitted to the receipt printer 4, and thereby, the communication channel which is used between the receipt printer 4 and the POS terminal 2 is changed. For example, the POS terminal 2 transmits a change request of a communication channel including information indicating a communication channel which is newly used for the wireless communication with the receipt printer 4 to the receipt printer 4. In a case where the receipt printer 4 receives the change request of the communication channel, the receipt printer 4 recognizes the communication channel which is newly used for the wireless communication with the POS terminal 2 from the change request of the communication channel, transmits a response to the change request of the communication channel to the POS terminal 2, and rewrites the communication channel stored in the storage unit 43 of the receipt printer 4 to the communication channel which is newly used. In a case where the POS terminal 2 receives the response to the change request of the communication channel, the POS terminal 2 rewrites the communication channel of the communication setting of the nonvolatile memory 24 thereof to the newly used communication channel. Thereby, the POS terminal 2 can change the communication channel which is used for the wireless communication between the POS terminal 2 and the receipt printer 4 at an arbitrary timing.

In the above embodiment, it is described that the receipt printer 4 is configured to print out the communication setting sheet when the power of the receipt printer 4 is on, but an exemplary embodiment of the present disclosure is not limited to this configuration. The receipt printer 4 may be configured to periodically print out the communication setting sheet every few hours, every day, or the like.

### Second Embodiment

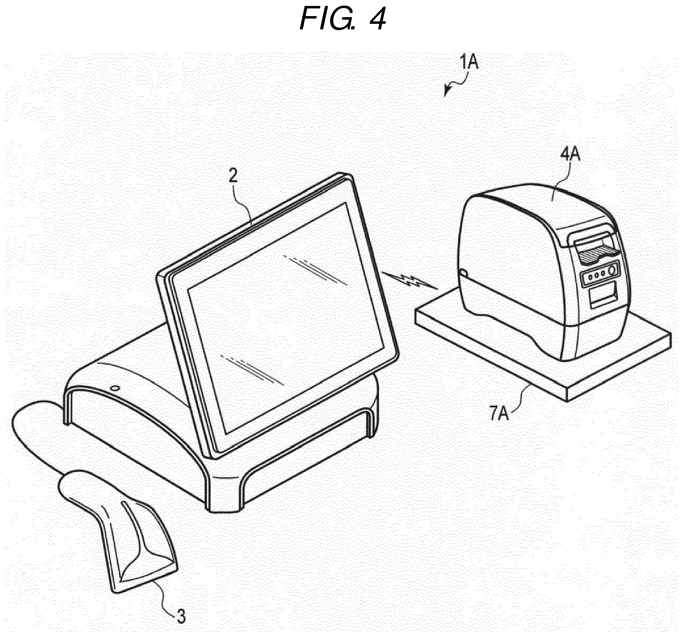

Next, a wireless communication system 1A according to a second embodiment will be described. FIG. 4 is a view illustrating a configuration example of the wireless communication system 1A according to the second embodiment. The wireless communication system 1A includes, for example, the POS terminal 2, the scanner 3, a receipt printer 4A, and a power transmission base 7A. The same symbols or reference numerals will be attached to the same configurations as those of the first embodiment, and a detailed description thereof will be omitted.

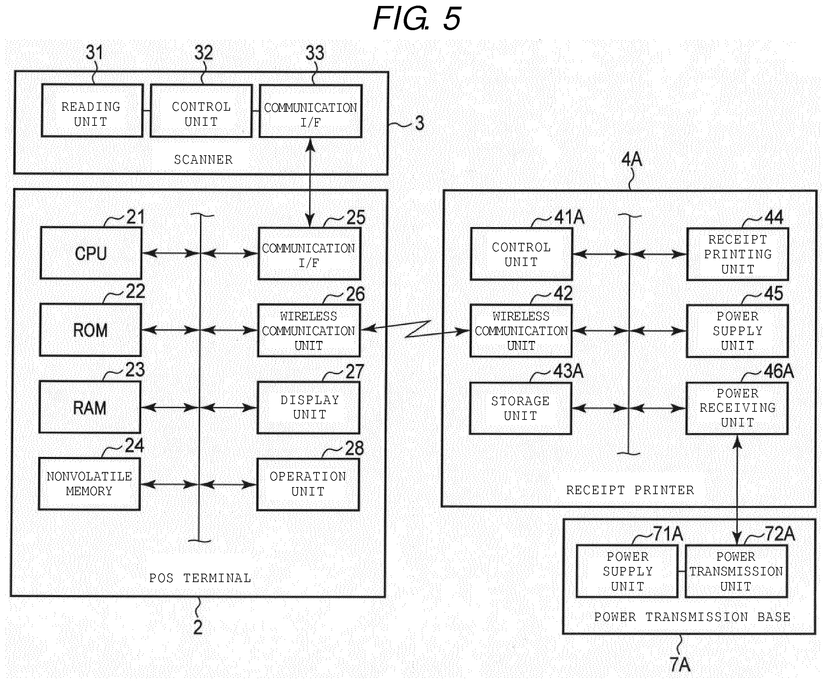

FIG. 5 is a diagram illustrating a configuration example of the POS terminal 2, the scanner 3, the receipt printer 4A, and the power transmission base 7A of the wireless communication system 1A.

The receipt printer 4A is a device that prints results of settlement processing by the POS terminal 2 on a medium such as paper sheet and outputs the results. The receipt printer 4A receives print data indicating the results of settlement from the POS terminal 2 and performs printing on a medium according to the received print data. The receipt printer 4A includes a control unit 41A, the wireless communication unit 42, a storage unit 43A, the receipt printing unit 44, the power supply unit 45, and a power receiving unit 46A.

The control unit 41A controls an operation of the receipt printer 4A. A configuration of the control unit 41A is the same as that of the control unit 41.

The storage unit 43A is a storage medium that can store various types of information. The storage unit 43A stores a program and data used for the program. The storage unit 43A is, for example, a semiconductor memory. Instead of the storage unit 43A, a memory I/F such as a card slot into which a storage medium such as a memory card can be inserted may be provided. For example, the storage unit 43A stores a communication channel which is used by the wireless communication unit 42 for wireless communication with the POS terminal 2 and a communication address that is identification information for allowing other devices to identify the receipt printer 4A. Furthermore, the storage unit 43A stores the identification information peculiar to the power transmission base 7A that supplies power to the receipt printer 4A.

The power receiving unit 46A receives the power supplied from the power transmission base 7A and supplies the power to the power supply unit 45. The power receiving unit 46A includes a transformer circuit that receives power from the power transmission base 7A wirelessly. In addition, the power receiving unit 46A can also transmit and receive information through wireless communication by using a transformer circuit. The power receiving unit 46A transmits the received information to the control unit 41A.

The power transmission base 7A supplies electric power to the receipt printer 4A. The power transmission base 7A includes a power supply unit 71A and a power transmission unit 72A. The power supply unit 71A supplies the power supplied from the commercial power supply through an AC adapter (not illustrated) to the power transmission unit 72A. The power transmission unit 72A includes a transformer circuit that wirelessly transmits power to the receipt printer 4A. The transformer circuit of the power transmission unit 72A is magnetically connected to the power receiving unit 46A of the receipt printer 4A placed on the power transmission base 7A. The power transmission unit 72A generates a magnetic field in the transformer circuit by the electric power supplied from the power supply unit 71A, and thereby, an induced current is generated in the transformer circuit of the power receiving unit 46A of the receipt printer 4A placed on the power transmission base 7A. Thereby, the power transmission unit 72A wirelessly supplies power to the receipt printer 4A.

Furthermore, the power transmission unit 72A has a communication function of transmitting a signal to the power receiving unit 46A of the receipt printer 4A through the transformer circuit of the power transmission unit 72A. For example, the power transmission unit 72A supplies power to the power receiving unit 46A by changing the current flowing through the transformer circuit, and transmits the power transmission base identification information of the power transmission base 7A to the receipt printer 4A. In addition, the power transmission unit 72A may acquire a power value received by the power receiving unit 46A of the receipt printer 4A through communication, may perform control of transmission power, detection of a foreign object between the power transmission unit 72A and the power receiving unit 46A, and the like.

The control unit 41A of the receipt printer 4A outputs a receipt by printing a design according to the print data supplied from the POS terminal 2 through the wireless communication unit 42 on the medium by using the receipt printing unit 44.

In addition, the control unit 41A of the receipt printer 4A stores the power transmission base identification information, which is acquired from the power transmission base 7A by using the power receiving unit 46A, in the storage unit 43A.

In addition, furthermore, in a case where the control unit 41A of the receipt printer 4A acquires new power transmission base identification information from the power transmission base 7A by the power receiving unit 46A, that is, in a case where the connection relation with the power transmission base 7A is changed, the control unit 41A of the receipt printer 4A causes the receipt printing unit 44 to print out the aforementioned communication setting sheet.

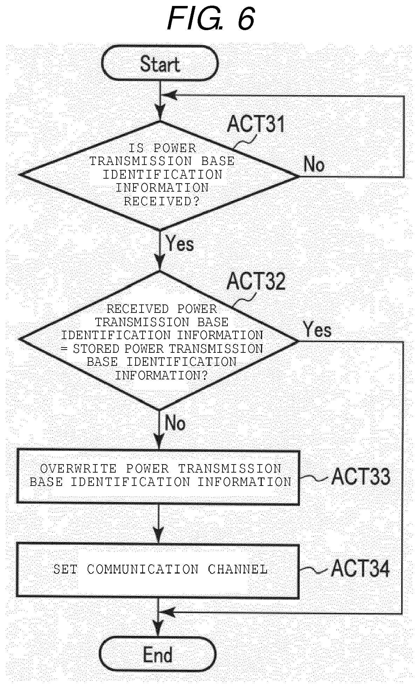

FIG. 6 is a diagram illustrating an operation of the receipt printer 4A. Processing of FIG. 6 corresponds to ACT 13 of FIG. 3.

The control unit 41A of the receipt printer 4A determines whether or not the power transmission base identification information is received from the power transmission base 7A (ACT 31).

In a case where it is determined that the power transmission base identification information is received from the power transmission base 7A (ACT 31, YES), the control unit 41A determines whether or not the received power transmission base identification information coincides with the power transmission base identification information stored in the storage unit 43 (ACT 32).

In a case where it is determined that the received power transmission base identification information does not coincide with the power transmission base identification information stored in the storage unit 43 (ACT 32, NO), the control unit 41A overwrites the received power transmission base identification information to the power transmission base identification information stored in the storage unit 43 (ACT 33).

The control unit 41A sets the communication channel stored in the storage unit 43 in the wireless communication unit 42 (ACT 34). That is, the control unit 41A sets a transmission/reception frequency of the wireless communication unit 42 to a frequency corresponding to the communication channel stored in the storage unit 43A. Thereby, the control unit 41A of the receipt printer 4 enters a state in which wireless communication can be performed. The communication channel which is used for setting the transmission/reception frequency of the wireless communication unit 42 may be preset (for example, default setting) or may be determined from a plurality of options based on, for example, a random number or the like.

Furthermore, after performing the processing of ACT 34, the control unit 41A proceeds to ACT 14 of FIG. 3 to output the communication setting sheet.

In addition, in a case where it is determined that the received power transmission base identification information coincides with the power transmission base identification information stored in the storage unit 43 (ACT 32, YES), the control unit 41A ends the processing of FIG. 6. In this case, the control unit 41A may be configured to proceed to ACT 14 of FIG. 3 to output the communication setting sheet, or may be configured to wait without performing ACT 14 of FIG. 3.

In a case where the power transmission base 7A onto which the receipt printer 4A is placed is changed to the new different power transmission base 7A, the receipt printer determines that it is necessary to perform communication setting processing with the POS terminal 2. Accordingly, in a case where the power transmission base identification information received from the currently placed power transmission base 7A does not coincide with the power transmission base identification information stored in the storage unit 43, the control unit 41A of the receipt printer 4A recognizes that the receipt printer 4A is placed on the power transmission base 7A, and outputs the communication setting sheet by using the receipt printing unit 44 so as to perform communication setting processing for the wireless communication with the POS terminal 2. That is, the receipt printer 4A outputs a communication setting pattern in a case where power is supplied from the new power transmission base 7A. With such a configuration, the receipt printer 4A does not need to perform the communication setting processing again with the POS terminal 2, while being placed on the same power transmission base 7A.

In the embodiments described above, it is described that the wireless communication system 1 performs communication setting processing for the wireless communication between the POS terminal 2 and the receipt printer 4, but an exemplary embodiment of the present disclosure is not limited to this configuration. The POS terminal 2 may be any type of devices as long as the device can read the communication setting pattern. In addition, the receipt printer 4 may be any type of devices as long as the device can form the communication setting pattern. For example, the receipt printer 4 may include a display device that does not have a printer and displays the design of the communication setting pattern.

In addition, in the above embodiments, it is described that the receipt printer 4 is configured to print the communication setting pattern including the communication address and the communication channel on a medium, but an exemplary embodiment of the present disclosure is not limited to this configuration. The receipt printer 4 may be configured to print communication setting patterns including a preset PIN for encryption and decryption, a communication address, and a communication channel on the medium. With such a configuration, the POS terminal 2 can acquire the PIN, the communication address, and the communication channel in ACT 17 of FIG. 3. Furthermore, the POS terminal 2 and the receipt printer 4 can transmit information in a state where the information which is transmitted and received is encrypted by the PIN during the communication of ACT 19 and ACT 20 in FIG. 3. Thereby, it is possible to improve the security of the communication setting processing which performed between the POS terminal 2 and the receipt printer 4. The PIN may be a preset value or may be generated based on a random number by the receipt printer 4 when the communication setting sheet is output by the receipt printer 4. In addition, furthermore, a password for wireless communication or the like may be added to the communication setting pattern.

While certain embodiments have been described, these embodiments have been presented by way of example only, and are not intended to limit the scope of an exemplary embodiment of the present disclosure. Indeed, the novel embodiments described herein may be embodied in a variety of other forms; furthermore, various omissions, substitutions and changes in the form of the embodiments described herein may be made without departing from the framework of an exemplary embodiment of the present disclosure. The accompanying claims and their equivalents are intended to cover such forms or modifications as would fall within the scope and framework of an exemplary embodiment of the present disclosure.

## Claims

1. A printer that communicates with a point-of-sale (POS) device, the printer comprising:
a wireless communication unit (42) configured to perform wireless communication at a predetermined communication frequency;
a memory (43A) that stores a communication address by which the POS device (2) can wirelessly communicate with the printer; and
a processor (41A) configured to generate a communication setting pattern by encoding the communication address and the predetermined communication frequency, and
wherein the processor (41A) is configured to
- receive the confirmation response transmitted by the wireless communication unit (42) from the POS device (2) through the wireless communication,
- determine whether or not the received confirmation response contains the communication address that coincides with the communication address stored in the memory (43A), and
- in a case where the received confirmation response contains the communication address that coincides with the communication address stored in the memory (43A), transmit the confirmation response to the POS device (2) by using the wireless communication unit (42),
**characterized in that**: in a case where a communication path is established between the printer (4) and the POS device (2),
in a case where the printer (4) receives a change request of a communication channel including information indicating a communication channel which is newly used for the wireless communication with the printer (4) to the printer (4), the printer (4) is configured to:
- recognize the communication channel which is newly used for the wireless communication with the POS device (2) from the change request of the communication channel,
- transmit a response to the change request of the communication channel to the POS device (2), and
- rewrite the communication channel stored in the memory (43A) of the printer (4) to the communication channel which is newly used.

2. The printer according to claim 1, wherein the processor generates the communication setting pattern upon power-on of the printer.

3. The printer according to claim 1 or 2, further comprising:
a power receiving unit is configured to detect the power-on of the printer when power is received thereby from an external source.

4. The printer according to claim 3, wherein the external source is an AC adapter and the power is received through a power line.

5. The printer according to claim 3, wherein the external source is a wireless power transmission base and the power is received wirelessly.

6. The printer according to any one of claims 1 to 5, wherein the confirmation response incudes a communication address of the POS device.

7. A point-of-sale (POS) device (2) that communicates with a printer (4) which encodes a communication frequency and a communication address by which the POS device (2) can wirelessly communicate with the printer (4) and outputs the encoded information as a communication setting pattern, the POS device (2) comprising:
a reader (3);
a wireless communication unit (26); and
a processor (21) configured to decode the communication address and the communication frequency from the communication setting pattern after the reader (3) acquires the communication setting pattern, and control the wireless communication unit to transmit a confirmation response to the communication address at the communication frequency, and
wherein the processor (21) is configured to
- receive the confirmation response transmitted from the printer (4) through the wireless communication by using the wireless communication unit (26),
- determine whether or not the confirmation response is transmitted to itself as a target and whether or not a processing according to the confirmation response is normally performed, and
- in a case where the confirmation response is transmitted to itself as a target and the processing according to the confirmation response is normally performed, to determine that a communication path is established between the printer (4) and the POS device (2),
**characterized in that**: in a case where the communication path is established between the printer (4) and the POS device (2),
the POS device (2) is configured to transmit a change request of a communication channel including information indicating a communication channel which is newly used for the wireless communication with the printer (4) to the printer (4),
in a case where the POS device (2) receives a response to the change request of the communication channel from the printer (4), the POS device (2) is configured to rewrite the communication channel of the communication setting of a nonvolatile memory (24) thereof to the newly used communication channel.

8. The POS device according to claim 7, wherein the confirmation response incudes a communication address of the POS device.

9. A wireless communication system comprising:
a printer (4) according to any one of claims 1 to 6, and
a point-of-sale (POS) device (2) according to claim 7 or 8.

## Patentansprüche

1. Drucker, der mit einer Point-of-Sale (POS)-Vorrichtung kommuniziert, wobei der Drucker umfasst:
eine drahtlose Kommunikationseinheit (42), die zum Durchführen von drahtloser Kommunikation auf einer vorbestimmten Kommunikationsfrequenz konfiguriert ist;
einen Speicher (43A), der eine Kommunikationsadresse speichert, durch welche die POS-Vorrichtung (2) drahtlos mit dem Drucker kommunizieren kann; und
einen Prozessor (41A), der zum Erzeugen eines Kommunikationseinstellungsmusters durch Codieren der Kommunikationsadresse und der vorbestimmten Kommunikationsfrequenz konfiguriert ist, und
wobei der Prozessor (41A) konfiguriert ist zum:
- Empfangen der Bestätigungsantwort, die durch die drahtlose Kommunikationseinheit (42) gesendet wird, von der POS-Vorrichtung (2) durch die drahtlose Kommunikation,
- Bestimmen, ob die empfangene Bestätigungsantwort die Kommunikationsadresse, die mit der im Speicher (43A) gespeicherten Kommunikationsadresse überreinstimmt, enthält oder nicht, und
- Senden, falls die empfangene Bestätigungsantwort die Kommunikationsadresse enthält, die mit der im Speicher (43A) gespeicherten Kommunikationsadresse überreinstimmt, der Bestätigungsantwort an die POS-Vorrichtung (2) durch Verwenden der drahtlosen Kommunikationseinheit (42),
**dadurch gekennzeichnet, dass**: falls ein Kommunikationspfad zwischen dem Drucker (4) und der POS-Vorrichtung (2) aufgebaut ist,
der Drucker (4), falls der Drucker (4) eine Änderungsanforderung eines Kommunikationskanals empfängt, die Informationen umfasst, die einen Kommunikationskanal, der für die drahtlose Kommunikation mit dem Drucker (4) neu verwendet wird, für den Drucker (4) angeben, konfiguriert ist zum:
- Erkennen des Kommunikationskanals, der für die drahtlose Kommunikation mit der POS-Vorrichtung (2) neu verwendet wird, aus der Änderungsanforderung des Kommunikationskanals,
- Senden einer Antwort auf die Änderungsanforderung des Kommunikationskanals an die POS-Vorrichtung (2), und
- Überschreiben des im Speicher (43A) des Druckers (4) gespeicherten Kommunikationskanals mit dem Kommunikationskanal, der neu verwendet wird.

2. Drucker nach Anspruch 1, wobei der Prozessor das Kommunikationseinstellungsmuster bei Einschalten des Druckers erzeugt.

3. Drucker nach Anspruch 1 oder 2, ferner umfassend:
eine Leistungsempfangseinheit, die so konfiguriert ist, dass sie das Einschalten des Druckers erkennt, wenn durch sie Leistung von einer externen Quelle empfangen wird.

4. Drucker nach Anspruch 3, wobei die externe Quelle ein AC-Adapter ist, und die Leistung durch eine Stromleitung empfangen wird.

5. Drucker nach Anspruch 3, wobei die externe Quelle eine drahtlose Leistungsübertragungsbasis ist, und die Leistung drahtlos empfangen wird.

6. Drucker nach einem der Ansprüche 1 bis 5, wobei die Bestätigungsantwort eine Kommunikationsadresse der POS-Vorrichtung umfasst.

7. Point-of-Sale (POS)-Vorrichtung (2), die mit einem Drucker (4) kommuniziert, der eine Kommunikationsfrequenz und eine Kommunikationsadresse codiert, durch welche die POS-Vorrichtung (2) drahtlos mit dem Drucker (4) kommunizieren kann, und die codierten Informationen als ein Kommunikationseinstellungsmuster ausgibt, wobei die POS-Vorrichtung (2) umfasst:
ein Lesegerät (3);
eine drahtlose Kommunikationseinheit (26); und
einen Prozessor (21), der so konfiguriert ist, dass er nach Erfassen des Kommunikationseinstellungsmusters durch das Lesegerät (3) die Kommunikationsadresse und die Kommunikationsfrequenz aus dem Kommunikationseinstellungsmuster decodiert und die drahtlose Kommunikationseinheit zum Senden einer Bestätigungsnachricht an die Kommunikationsadresse auf der Kommunikationsfrequenz steuert, und
wobei der Prozessor (21) konfiguriert ist zum
- Empfangen der Bestätigungsantwort, die vom Drucker (4) gesendet wird, durch die drahtlose Kommunikation durch Verwenden der drahtlosen Kommunikationseinheit (26),
- Bestimmen, ob die Bestätigungsantwort an ihn selbst als Ziel gesendet wird und ob eine Verarbeitung gemäß der Bestätigungsantwort normal durchgeführt wird oder nicht, und
- Bestimmen, falls die Bestätigungsantwort an ihn selbst als Ziel gesendet und die Verarbeitung gemäß der Bestätigungsantwort normal durchgeführt wird, dass ein Kommunikationspfad zwischen dem Drucker (4) und der POS-Vorrichtung (2) aufgebaut ist,
**dadurch gekennzeichnet, dass**: falls der Kommunikationspfad zwischen dem Drucker (4) und der POS-Vorrichtung (2) aufgebaut ist,
die POS-Vorrichtung (2) so konfiguriert ist, dass sie eine Änderungsanforderung eines Kommunikationskanals sendet, die Informationen umfasst, die einen Kommunikationskanal, der für die drahtlose Kommunikation mit dem Drucker (4) neu verwendet wird, für den Drucker (4) angeben,
die POS-Vorrichtung (2) so konfiguriert ist, dass sie, falls die POS-Vorrichtung (2) eine Antwort auf die Änderungsanforderung des Kommunikationskanals vom Drucker (4) empfängt, den Kommunikationskanal der Kommunikationseinstellung eines nichtflüchtigen Speichers (24) davon mit dem neu verwendeten Kommunikationskanal überschreibt.

8. POS-Vorrichtung nach Anspruch 7, wobei die Bestätigungsantwort eine Kommunikationsadresse der POS-Vorrichtung umfasst.

9. Drahtloses Kommunikationssystem, umfassend:
einen Drucker (4) nach einem der Ansprüche 1 bis 6; und
eine Point-of-Sale (POS)-Vorrichtung (2) nach Anspruch 7 oder 8.

## Revendications

1. Imprimante qui communique avec un dispositif de point de vente (POS), l'imprimante comprenant :
une unité de communication sans fil (42) configurée de manière à mettre en œuvre une communication sans fil, à une fréquence de communication prédéterminée ;
une mémoire (43A) qui stocke une adresse de communication par le biais de laquelle le dispositif POS (2) peut communiquer par voie hertzienne avec l'imprimante ; et
un processeur (41A) configuré de manière à générer un motif de définition de communication, en codant l'adresse de communication et la fréquence de communication prédéterminée ; et
dans laquelle le processeur (41A) est configuré de manière à :
- recevoir la réponse de confirmation transmise par l'unité de communication sans fil (42), à partir du dispositif POS (2), par le biais de la communication sans fil ;
- déterminer si la réponse de confirmation reçue contient ou non l'adresse de communication qui coïncide avec l'adresse de communication stockée dans la mémoire (43A) ; et
- dans le cas où la réponse de confirmation reçue contient l'adresse de communication qui coïncide avec l'adresse de communication stockée dans la mémoire (43A), transmettre la réponse de confirmation, au dispositif POS (2), en utilisant l'unité de communication sans fil (42) ;
**caractérisée en ce que** : dans le cas où un trajet de communication est établi entre l'imprimante (4) et le dispositif POS (2) :
dans le cas où l'imprimante (4) reçoit, au niveau de l'imprimante (4), une demande de modification d'un canal de communication incluant des informations indiquant un canal de communication qui est nouvellement utilisé pour la communication sans fil avec l'imprimante (4), l'imprimante (4) est configurée de manière à :
- reconnaître le canal de communication qui est nouvellement utilisé pour la communication sans fil avec le dispositif POS (2) à partir de la demande de modification du canal de communication ;
- transmettre une réponse à la demande de modification du canal de communication, au dispositif POS (2) ; et
- réécrire le canal de communication stocké dans la mémoire (43A) de l'imprimante (4) sur le canal de communication qui est nouvellement utilisé.

2. Imprimante selon la revendication 1, dans laquelle le processeur génère le motif de définition de communication lors de la mise sous tension de l'imprimante.

3. Imprimante selon la revendication 1 ou 2, dans laquelle en outre :
une unité de réception de puissance est configurée de manière à détecter la mise sous tension de l'imprimante lorsque de la puissance est ainsi reçue en provenance d'une source externe.

4. Imprimante selon la revendication 3, dans laquelle la source externe est un adaptateur d'alimentation en courant continu, et dans laquelle la puissance est reçue par le biais d'une ligne électrique.

5. Imprimante selon la revendication 3, dans laquelle la source externe est une base de transmission de puissance sans fil, et dans laquelle la puissance est reçue par voie hertzienne.

6. Imprimante selon l'une quelconque des revendications 1 à 5, dans laquelle la réponse de confirmation inclut une adresse de communication du dispositif POS.

7. Dispositif de point de vente (POS) (2) qui communique avec une imprimante (4) qui code une fréquence de communication et une adresse de communication par le biais desquelles le dispositif POS (2) peut communiquer par voie hertzienne avec l'imprimante (4), et qui fournit en sortie les informations codées sous la forme d'un motif de définition de communication, le dispositif POS (2) comprenant :
un lecteur (3) ;
une unité de communication sans fil (26) ; et
un processeur (21) configuré de manière à décoder l'adresse de communication et la fréquence de communication à partir du motif de définition de communication, après que le lecteur (3) a acquis le motif de définition de communication, et à commander à l'unité de communication sans fil de transmettre une réponse de confirmation, à l'adresse de communication, à la fréquence de communication ; et
dans lequel le processeur (21) est configuré de manière à :
- recevoir la réponse de confirmation transmise à partir de l'imprimante (4), par le biais de la communication sans fil, en utilisant l'unité de communication sans fil (26) ;
- déterminer si la réponse de confirmation lui est transmise en tant que cible et si un traitement selon la réponse de confirmation est mis en œuvre normalement ; et
- dans le cas où la réponse de confirmation lui est transmise en tant que cible et où le traitement selon la réponse de confirmation est mis en œuvre normalement, déterminer si un trajet de communication est établi entre l'imprimante (4) et le dispositif POS (2),
**caractérisé en ce que**, dans le cas où le trajet de communication est établi entre l'imprimante (4) et le dispositif POS (2),
le dispositif POS (2) est configuré de manière à transmettre, à l'imprimante (4), une demande de modification d'un canal de communication incluant des informations indiquant un canal de communication qui est nouvellement utilisé pour la communication sans fil avec l'imprimante (4) ;
dans le cas où le dispositif POS (2) reçoit, en provenance de l'imprimante (4), une réponse à la demande de modification du canal de communication, le dispositif POS (2) est configuré de manière à réécrire le canal de communication du motif de définition de communication d'une mémoire non volatile (24) connexe sur le canal de communication nouvellement utilisé.

8. Dispositif POS selon la revendication 7, dans lequel la réponse de confirmation inclut une adresse de communication du dispositif POS.

9. Système de communication sans fil comprenant :
une imprimante (4) selon l'une quelconque des revendications 1 à 6 ; et
un dispositif de point de vente (POS) (2) selon la revendication 7 ou 8.
